Europäisches Patentamt

(19) European Patent Office

Office européen des brevets

(11) Publication number: **0 050 489**

**B1**

(12) **EUROPEAN PATENT SPECIFICATION**

(45) Date of publication of patent specification: **15.05.85**

(51) Int. Cl.⁴: **H 01 M 2/06, H 01 M 2/30**

(21) Application number: **81304830.3**

(22) Date of filing: **16.10.81**

(54) **A method of assembling a storage battery.**

(30) Priority: **16.10.80 JP 145426/80**

(43) Date of publication of application:
**28.04.82 Bulletin 82/17**

(45) Publication of the grant of the patent:
**15.05.85 Bulletin 85/20**

(84) Designated Contracting States:
**DE FR GB IT SE**

(56) References cited:
**GB-A-1 372 407**
**GB-A-1 496 478**
**US-A-3 918 993**
**US-A-4 120 087**

(73) Proprietor: **YUASA BATTERY CO., LTD.**
**6-6, Johsai-cho**
**Takatsuki-shi, Osaka (JP)**

(72) Inventor: **Hasegawa, Yoshio**
**6-6, Johsaicho**
**Takatsuki City Osaka Prefecture (JP)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to a method of assembling a storage battery.

It is known to cast a terminal and the terminal post integrally of a lead alloy. However, the terminal and its base are required to be of a predetermined mechanical strength and are therefore made thicker than required for the electric conduction. This is unsatisfactory not only because a large amount of lead alloy is required but also because cracks and burns occur due to the non-uniform thickness. Simply to make the terminal hollow or thin would reduce the mechanical strength and be likely to give rise to other problems in production and practice.

GB—A—1,372,407 and US—A—3,918,993 each disclose a terminal post for a storage battery, comprising a terminal portion standing on a post, the terminal portion and the post being formed integrally of lead alloy. The terminal portion is hollow and open at its upper end and has in the wall thereof an opening which is filled with synthetic resin material forming a connection between a body of synthetic resin material within the terminal portion and synthetic resin material surrounding the base of the terminal portion.

The above-mentioned US—A—3,918,993 teaches injecting the synthetic material through the terminal post and openings in the wall thereof to form a seal with the battery cover. This is done *in situ* after securing the cover to the casing.

According to the present invention we propose a method of assembling a storage battery having a battery container to which a battery cover is joined by fusing, the cover having a plurality of openings through each of which projects a terminal post joined to the cover and comprising a hollow terminal portion which is open at its upper end and stands on a post, the hollow terminal portion and the post being formed integrally of lead alloy and having in the wall of the terminal portion an opening which is filled with a synthetic resin material forming a connection between a body of synthetic resin material within the hollow terminal portion and synthetic resin material surrounding the base of the terminal portion, the method of assembly being characterised in that, prior to fitting the cover to the container, the terminal posts are inserted through the openings in the battery such that the synthetic resin material surrounding the base of the terminal portion contacts the lower face of the cover adjacent the openings, and in that the synthetic resin material surrounding the base of the terminal portion is permanently joined to the lower face of the cover adjacent the opening at the same time as permanently fusing the cover to the container.

Other features of the present invention are set forth in the appendent claims and in the following description, by way of example, of embodiments of the invention shown in the accompanying drawings in which:

Fig. 1 is a vertical cross-section of a terminal post for a storage battery;

Fig. 2 is a vertical cross-section of a casting comprising a hollow terminal standing upon an integral post;

Fig. 3 is a sectioned view showing the casting of Fig. 2 inserted in a mold for synthetic resin material;

Fig. 4 is a vertical section of part of a storage battery cover;

Fig. 5 is a vertical section of the part of the battery cover of Fig. 4 fitted with the terminal post shown in Fig. 1;

Fig. 6 is a vertical section of another terminal post;

Fig. 7 is a cross-section on line VII—VII' in Fig. 6;

Fig. 8 is a vertical section of a part of a storage battery cover;

Fig. 9 is a vertical section of the terminal post of Fig. 6 fitted to part of the storage battery cover shown in Fig. 8;

Fig. 10 is a vertical section of another terminal post;

Fig. 11 is a cross-section on line XI—XI' in Fig. 10;

Fig. 12 is a perspective view of a storage battery according to the present invention;

Fig. 13 is an enlarged part cross-section perspective view of part of the storage battery shown in Fig. 12.

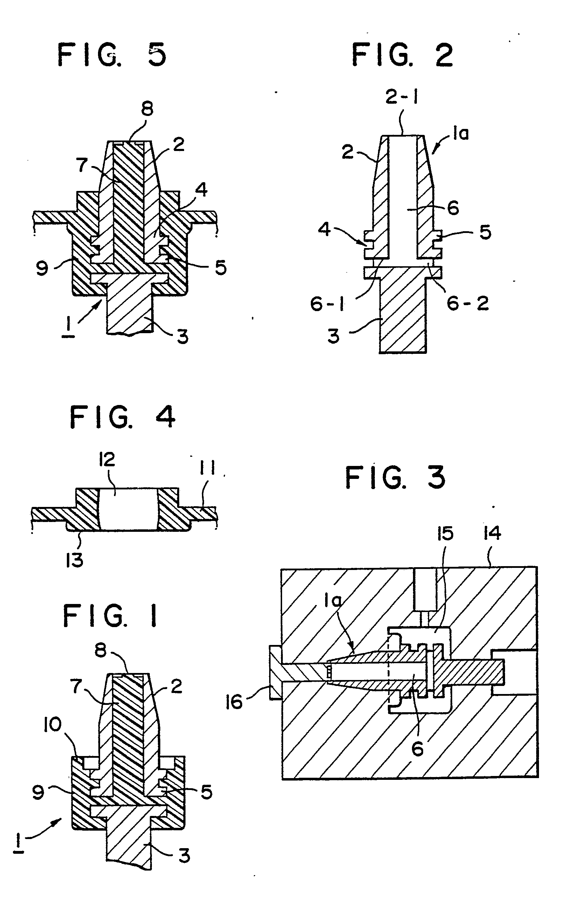

In Figs. 1 and 5, the reference numeral 1 denotes a complete terminal.

Fig. 2 shows a body; in this case a lead-alloy casting, 1a comprising a hollow terminal portion 2 which stands upon and is integral with a post 3. The terminal portion 2 is hollow (6) and is open at its upper end 2-1. At the base 4 of the hollow terminal portion 2 are at least two (two shown) openings 6-1 and 6-2 extending horizontally from the interior 6 of the portion 2 through the wall of the portion 2 and opening into the space between the two lowest of three annular projections at ridges 5 around the terminal base 4. As shown in Fig. 1, the interior 6 of the hollow of three annular projections at ridges 5 around the terminal base 4. As shown in Fig. 1, the interior 6 of the hollow terminal portion 2, the openings 6-1 and 6-2 are filled with a synthetic resin material 7 and a symbol 8 indicating the polarity if the terminal is impressed on the synthetic resin surface at the open upper end 2-1 of the terminal portion. A band 9 of synthetic resin material surrounding the periphery of the terminal base 4 is moulded at the same time as the interior 6 of the hollow terminal portion 2 and the openings 6-1 and 6-2 are filled with synthetic resin material 7 and is integral with that material 7. The reference numeral 10 denotes the upper edge of the synthetic resin surrounding portion.

The terminal post of Fig. 1 is inserted in a hole 12 formed for this purpose in a cover 11 of a storage battery (see Fig. 4) and the upper edge 10 of the synthetic resin band 9 and is joined to the lower face 13 of the cover as illustrated in Fig. 5.

To manufacture the terminal post described above, the body 1a comprising the hollow terminal portion 2, integral post 3 and formed with the terminal post 1a molded integrally openings 6-1 and 6-2 and sides 5 is first cast in lead alloy. The cast body 1a (Fig. 2) then is inserted in a mold 14 and the mold closed as shown in Fig. 3 so defining a cavity 15 around the terminal base 4. A former 16 bearing a symbol indicating the polarity of the particular terminal closes the open end 2-1 of the hollow terminal portion 2. Thereafter, molten synthetic resin injected into the mold 14, flows around the cavity 15, and through the openings 6-1 and 6-2 and eventually fills interior of the hollow terminal portion 2 6-1 and 6-2 so contacting former 16.

The synthetic resin is then allowed to set and then removed to produce the terminal post shown in Fig. 1, which is filled with synthetic resin and has a moulded band 9 surrounding the terminal base, the band 9 being integrally connected with the synthetic resin filling the terminal portion 2 by resin filling the openings 6-1 and 6-2.

The storage battery cover is joined to the battery container (not shown) by fusing together contact surfaces which are first heated, for example, with a hot plate. Conveniently, the upper edge 10 of the resin band 9 and the lower face 13 of the storage battery cover 11 around the hole 12 are heated at the same time, the terminal 2 then being inserted through the hole 12 and the above-mentioned heated surfaces pressed into contact with each other, to produce fused joints between the cover and the battery container and between the terminal post and the cover as shown in Fig. 5, so ensuring a liquid tight seal.

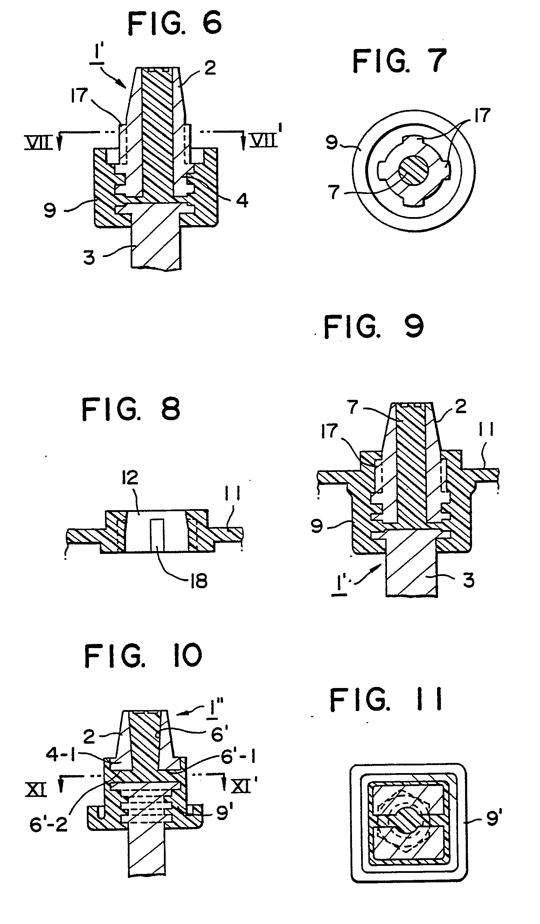

Figs. 6 and 7 show another embodiment of terminal post 1' which differs from the above described embodiment in that external equally angularly spaced projections 17 extending along the terminal portion 2 toward the terminal base 4 are provided to prevent rotation of the terminal post in the cover 11, the projections 17 being received in recesses 18 formed in the cover 11 around the hole 12 (as shown in Fig. 8). The terminal post 1' fitted in a storage battery cover 11 is illustrated in Fig. 9.

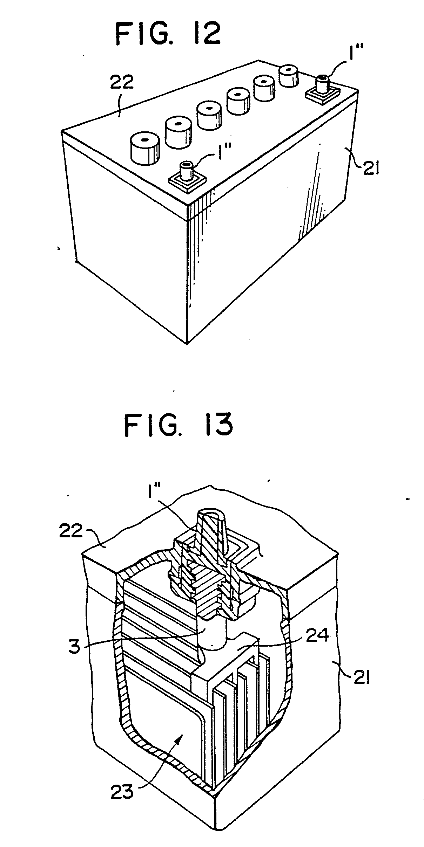

Another embodiment of terminal post 1" is shown in Figs. 10 and 11 differs from that in Fig. 1 in that the interior 6' of the terminal portion 2 diverges toward its open upper end, the terminal base 4 has a polygonal (square in the drawing) external flange 4-1 openings 6'-1 and 6'-2 are in a comparatively upper portion of the terminal base 4 and (4) the synthetic material 9' surrounding the terminal base has a polygonal (square in the drawing) external shape. The effect of this is that, when the terminal post is fitted to the battery container cover, a mechanical strength will be retained against the torque. Further, the divergent interior of the hollow terminal portion serves to smooth the movement of the casting mold by the shrinkage of lead in casting the terminal post.

Fig. 12 shows the terminal post 1" of Fig. 10 fitted to the cover 22 of a battery container 21. Fig. 13 is an enlarged partly sectioned view of the battery in Fig. 12 showing a plate group 23 and 24, a strap 24 of a plurality of plates of the same polarity.

The synthetic resin material may be a thermoplastic resin of particularly a polyolefine resin high in the thermofusibility and preferably polypropyrene. When parts are to be bonded together using a bonding agent, an AS or ABS resin is suitable. In order to determine the size (cross-sectional area) of the hole hollow within the terminal portion, the minimum cross-sectional area of metal must be at least larger than the cross-sectional area of the lower post. Further, the cross-sectional area of the horizontal openings should not be smaller than $0.78 \text{ mm}^2$ (1 mm diameter) only from moulding (jetting) the resin into the hole. If it is stressed to stop the rotation against the force in the terminal rotating direction, a cross-sectional area of $3 \text{ mm}^2$ (2 mm in the diameter) to $13 \text{ mm}^2$ (4 mm in the diameter) will be adapted. The cross-sectional area of the lead portion (except the joint hollows) must not be smaller than the cross-sectional area of the lower post portion. That is to say, it is important from the point of view of conduction that the hollow terminal portion has a conducting part with a cross-sectional area not less than the cross-sectional area of the post.

In all of the terminal posts described above, the terminal portion is hollow and is filled with synthetic resin material integrally connected, via the openings communicating with the interior of the terminal portion, with the synthetic resin material surrounding the base of the terminal position.- This construction has advantages, in that less lead alloy is required than for conventional terminal posts, the occurrence of cracks and burns is substantially eliminated and the terminal post is lighter (and stronger) than conventional posts. Also, the terminal post can be secured in a liquid-tight manner to the storage battery cover at the same time as the cover is fused to the battery container. Terminal posts can be manufactured and fitted efficiently at a comparatively low cost.

The provision of a projection to prevent a rotation of the terminal post ensures that any torque applied to the terminal is resisted and will impair the liquid-tight seal between the terminal post and the cover.

By forming a symbol indicating polarity at the upper end of the terminal post the need to provide such a symbol on the cover is avoided so that even when it is required to manufacture two kinds of storage battery which differ only in the arrangement of the polarity, the same cover may be used with obvious advantage in the productivity and control.

The synthetic resin filling the hollow terminal portion and surrounding the terminal base may be coloured to facilitate discrimination of polarity (for example, red for a positive terminal post and black or blue for a negative terminal post). This is particularly advantageous since battery containers are often formed of transparent or translucent material so that even when the storage battery is installed in a confined space, where only one side of the battery can be seen, it will be possible to identify the polarity of the terminals. When the terminal posts are coloured in this way the polarity sign need not be formed at the upper end of the terminal post.

## Claims

1. A method of assembling a storage battery having a battery container to which a battery cover is joined by fusing, the cover having a plurality of openings through each of which projects a terminal post joined to the cover and comprising a hollow terminal portion which is open at its upper end and stands on a post, the hollow terminal portion and the post being formed integrally of lead alloy and having in the wall of the terminal portion an opening which is filled with a synthetic resin material forming a connection between a body of synthetic resin material within the hollow terminal portion and synthetic resin material surrounding the base of the terminal portion, the method of assembly being characterised in that, prior to fitting the cover to the container, the terminal posts are inserted through the openings in the battery such that the synthetic resin material surrounding the base of the terminal portion contacts the lower face of the cover adjacent the openings, and in that the synthetic resin material surrounding the base of the terminal portion is permanently joined to the lower face of the cover adjacent the opening at the same time as permanently fusing the cover to the container.

2. A method according to claim 1 wherein each terminal post has an external projection which extends downwardly along a side surface of the terminal portion to the base thereof.

3. A method according to claim 1 or claim 2 wherein the terminal post has at least two openings in the wall of the terminal portion in the region of the base thereof.

4. A method according to any one of claims 1 to 3 wherein the synthetic resin material within the hollow terminal portion and the synthetic resin material surrounding the base thereof are the same material.

5. A method according to any one of claims 1 to 4 wherein the synthetic resin material is polypropylene.

6. A method according to any one of claims 1 to 5 wherein a polarity sign is formed on the top surface of the synthetic resin material filling the hollow terminal portion.

7. A method according to any one of claims 1 to 6 wherein the synthetic resin material surrounding the base of the terminal portion is formed to a polygonal shape.

8. A method according to any one of claims 1 to 7 wherein the hollow interior of the terminal portion diverges upwardly from the base thereof.

9. A method according to any one of claims 1 to 8 wherein the synthetic resin material filling the hollow terminal portion and the said opening and surrounding the base of the terminal portion is coloured to indicate the polarity of the terminal.

10. A method according to any one of claims 1 to 9 wherein the material surrounding the base of the terminal portions are joined to the cover, and the cover is joined to the container, by heating the contact surfaces and pressing them together to produced fused joints.

## Patentansprüche

1. Verfahren zur Montage einer Akkumulatorbatterie mit einem Batteriebehälter, an den ein Batteriedeckel durch Schmelzen verbunden ist, wobei der Deckel eine Vielzahl von Öffnungen hat, durch jede von ihnen ein Anschlußhalter herausragt, der mit dem Deckel verbunden ist und einen hohlen Anschlußabschnitt umfaßt, der an seinem oberen Ende offen ist und auf einem Halter steht, der hohle Anschlußabschnitt und der Halter einstückig aus Bleilegierung geformt sind und in der Wand der Anschlußabschnitts eine Öffnung haben, die mit einem Kunstharzmaterial gefüllt ist, das eine Verbindung zwischen einem Körper aus Kunstharzmaterial innerhalb des hohlen Anschlußabschnitts une einem Kunstharzmaterial, das die Basis der Anschlußabschnitts umgibt, bildet, wobei das Verfahren zur Montage dadurch gekennzeichnet ist, daß vor dem Anpassen des Deckels auf den Behälter die Anschlußhalter durch die Öffnungen in die Batterie eingesetzt werden, so daß das Kunstharzmaterial, das die Basis des Anschlußabschnitts umgibt, die untere Fläche des Deckels neben den Öffnungen berührt, und so, daß das Kunstharzmaterial, das die Basis des Anschlußabschnitts umgibt, ständig mit der unteren Fläche des Deckels neben der Öffnung verbunden ist, zur gleichen Zeit, zu der der Deckel an den Behälter ständig angeschmolzen wird.

2. Verfahren nach Anspruch 1, wobei jeder Anschlußhalter einen äußeren Vorsprung hat, der sich nach unten entlang einer seitlichen Oberfläche des Anschlußabschnitts in Richtung seiner Basis erstreckt.

3. Verfahren nach Anspruch 1 oder 2, wobei der Anschlußhalter mindestens zwei Öffnungen in der Wand des Anschlußabschnitts im Bereich seiner Basis hat.

4. Verfahren nach einem der Ansprüche 1 bis 3, wobei das Kunstharzmaterial innerhalb des hohlen Anschlußabschnitts und das Kunstharzmaterial, das dessen Basis umgibt, dasselbe Material sind.

5. Verfahren nach einem der Ansprüche 1 bis 4, wobei das Kunstharzmaterial Polypropylen ist.

6. Verfahren nach einem der Ansprüche 1 bis 5, wobei ein Polaritätszeichen auf der oberen Oberfläche des Kunstharzmaterials, das den hohlen Anschlußabschnitt ausfüllt, geformt ist.

7. Verfahren nach einem der Ansprüche 1 bis 6, wobei das Kunstharzmaterial, das die Basis des Anschlußabschnitts umgibt, in eine polygonale Form geformt ist.

8. Verfahren nach einem der Ansprüche 1 bis 7, wobei das hohle Innere des Anschlußabschnitts von seiner Basis nach oben divergiert.

9. Verfahren nach einem der Ansprüche 1 bis 8, wobei das Kunstharzmaterial, das den hohlen Anschlußabschnitt und diese Öffnung ausfüllt, und die Basis des Anschlußabschnitts umgibt, gefärbt ist, um die Polarität des Anschlusses zu kennzeichnen.

10. Verfahren nach einem der Ansprüche 1 bis 9, wobei das Material, das die Basis der Anschlußabschnitte umgibt, mit dem Deckel verbunden ist und der Deckel an dem Behälter verbunden ist, indem die Kontaktflächen erhitzt und zusammengedrückt werden, um Schmelzverbindungen zu erzeugen.

## Revendications

1. Procédé d'assemblage d'une batterie d'accumulateurs comprenant un conteneur pour la batterie auquel un couvercle de batterie est réuni par fusion, le couvercle comprenant une pluralité d'ouvertures à travers chacune desquelles fait saillie le fût d'une borne réunie au couvercle et comprenant une partie de borne creuse qui est ouverte à son extrémité supérieure et se situe sur un fût, la partie de la borne creuse et le fût étant constitués d'une seule pièce d'un alliage conducteur et comportant dans la paroi de la partie de la borne une ouverture qui est remplie d'un matériau en résine synthétique formant une liaison entre un corps de matériau en résine synthétique à l'intérieur de la partie de la borne creuse et le matériau en résine synthétique entourant la base de la partie de la borne, le procédé d'assemblage étant caractérisé en ce que, avant de fixer le couvercle au conteneur, les fûts des bornes sont introduits à travers des ouvertures de la batterie, de telle sorte que le matériau en résine synthétique entourant la base de la partie de la borne, vient en contact avec la face inférieure du couvercle au voisinage des ouvertures, et en ce que le matériau en résine synthétique entourant la base de la partie de la borne est relié de façon permanente à la face inférieure du couvercle au voisinage des ouvertures en même temps qu'est effectuée la fusion permanente du couvercle sur le conteneur.

2. Procédé selon la revendication 1, dans lequel chaque fût de borne présente une saillie externe qui s'étend vers le bas le long d'une surface latérale de la partie de la borne vers sa base.

3. Procédé selon la revendication 1, ou la revendication 2 dans lequel le fût de la borne comporte au moins deux ouvertures dans la paroi de la partie de la borne dans la région de sa base.

4. Procédé selon l'une des revendications 1 à 3, dans lequel le matériau en résine synthétique à l'intérieur de la partie de la borne creuse et le matériau en résine synthétique entourant sa base sont constitués par la même matière.

5. Procédé selon l'une des revendications 1 à 4, dans lequel le matériau en résine synthétique est du polypropylène.

6. Procédé selon l'une des revendications 1 à 5 dans lequel un signe de polarité est formé sur la surface supérieure du matériau en résine synthétique emplissant la partie de borne creuse.

7. Procédé selon l'une des revendications 1 à 6, dans lequel le matériau en résine synthétique entourant la base de la partie de la borne présente une forme polygonale.

8. Procédé selon l'une des revendications 1 à 7 dans lequel l'intérieur creux de la partie de la borne est formé en divergeant vers le haut à partir de sa base.

9. Procédé selon l'une des revendications 1 à 8, dans lequel le matériau en résine synthétique emplissant la partie de borne creuse et ladite ouverture et entourant la base de la partie de la borne est coloré de façon à indiquer la polarité de la borne.

10. Procédé selon l'une des revendications 1 à 9, dans lequel le matériau entourant la base des parties de borne est réuni au couvercle, et le couvercle est réuni au conteneur par chauffage et pressage des surfaces en contact l'une contre l'autre pour produire les jonctions de fusion.

0 050 489

# FIG. 5

# FIG. 2

# FIG. 4

# FIG. 3

# FIG. 1

1

FIG. 6

FIG. 7

FIG. 8

FIG. 9

FIG. 10

FIG. 11

# FIG. 12

# FIG. 13